(19) **Europäisches Patentamt / European Patent Office / Office européen des brevets**

(11) **EP 2 479 532 A1**

(12) # EUROPEAN PATENT APPLICATION

(43) Date of publication:
25.07.2012 Bulletin 2012/30

(51) Int Cl.:
*G01B 9/02* (2006.01)     *G01B 9/04* (2006.01)
*G01J 9/02* (2006.01)

(21) Application number: 11000436.3

(22) Date of filing: 20.01.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: OLYMPUS CORPORATION
Shibuya-ku
Tokyo 151-0072 (JP)

(72) Inventor: Murayama, Yoshiaki
Tokyo 151-0072 (JP)

(74) Representative: Gunzelmann, Rainer
Wuesthoff & Wuesthoff
Patent- und Rechtsanwälte
Schweigerstraße 2
81541 München (DE)

(54) **Wavefront measurement apparatus**

(57)     A wavefront measurement apparatus includes a light source that emits a light beam; a light splitting unit that splits the light beam emitted from the light source into an object light beam and a reference light beam; an objective lens that converges the object light beam at a predetermined position of a test object; a light combining unit that superimposes the object light beam returning from the test object and the reference light beam; a light deflecting unit that guides the object light beam returning from the test object towards the light combining unit; an imaging unit that captures an image of an interference pattern formed by combined wavefronts; and a light quantity adjusting filter that adjusts a light quantity, and that is arranged in a optical path between the light deflecting unit and the light combining unit that allows only the transmission of the object light beam from the test object.

FIG.2

**Description**

BACKGROUND OF THE INVENTION

1. Field of the Invention

The present invention relates to a wavefront measurement apparatus, and more particularly relates to a wavefront measurement apparatus that forms a focal point in a scattering body that is a test object and measures a wavefront based on an interference pattern formed due to a returning light from the focal point.

2. Description of the Related Art

Conventionally, a wavefront measurement apparatus disclosed in, for example, Publication of United States Patent Application No. 2006/0033933 is known in the art. In this conventional wavefront measurement apparatus, a focal point is formed in a scattering body that is a test object, and a wavefront of a biological body is measured based on an interference pattern formed due to a returning light from the focal point.

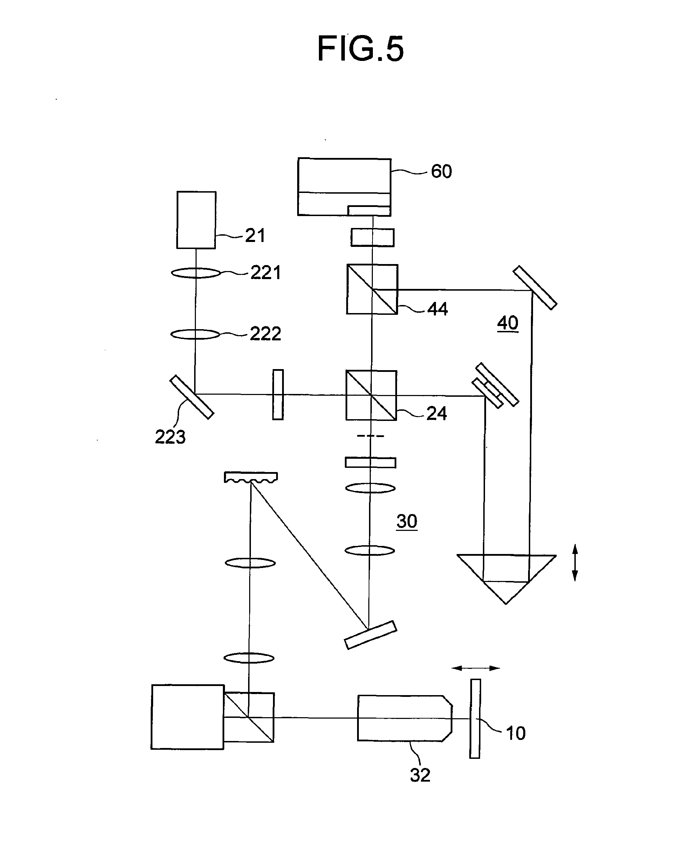

FIG. 5 is a schematic diagram of the conventional wavefront measurement apparatus. A light beam emitted from a Ti:sa laser light source 21 is converted into a parallel light beam by collimator lenses 221 and 222. The parallel light beam whose traveling direction is bent by 90 degrees by a mirror 223 becomes incident on a beam splitter 24.

The beam splitter 24 splits the light into an incident light, which is directed toward a scattering sample 10 that is a biological body (object light beam), and a reference light beam. The incident light forms a focal point in the scattering sample 10 by the action of an objective lens 32.

In a beam splitter 44, a returning light from the focal point is superimposed on the reference light beam split by the beam splitter 24 and an interference pattern is generated. The interference pattern is observed by a camera 60 and a wavefront in the scattering sample 10 is measured.

Because a coherence of the Ti:sa laser light source 21 is low, only a returning light from a depth in the biological body for which optical path lengths of an incident optical path 30 and a reference optical path 40 substantially match, contributes to the generation of the interference pattern. A range of a difference in the optical path lengths of the incident optical path 30 and the reference optical path 40 that can contribute to the generation of the interference path is called coherence gate. The interference pattern at a focal point position in the coherence gate should preferably be observed. Thus, the reference optical path 40 should be adjusted according to a depth of the focal point position so that a center of the coherence gate coincides with a depth of the focal point.

A brightness of the returning light from the scattering body is different in a central portion and in a peripheral portion. The reason is that, the distance for which the light passes through the scattering body is longer in the peripheral portion than in the central portion. In this situation, if the interference pattern is generated by the returning light, a contrast of the interference pattern differs in the central portion and the peripheral portion. Therefore, the interference pattern can be obtained either in the central portion or in the peripheral portion. Consequently, a precision of wavefront measurement cannot be improved.

SUMMARY OF THE INVENTION

The present invention is made in view of the above discussion, and it is an object of the present invention to provide a wavefront measurement apparatus that can obtain an interference pattern having a good contrast and measure a wavefront with high precision over an entire surface of a test object.

To solve the above problems and to achieve the above objects, according to an aspect of the present invention, a wavefront measurement apparatus includes a light source that emits a light beam; a light splitting unit that splits the light beam emitted from the light source into an object light beam and a reference light beam; an objective lens that converges the object light beam at a predetermined position of a test object; a light combining unit that superimposes the object light beam returning from the test object and the reference light beam; a light deflecting unit that guides the object light beam returning from the test object towards the light combining unit; an imaging unit that captures an image of an interference pattern formed by combined wavefronts; and a light quantity adjusting filter that adjusts a light quantity, and that is arranged in a optical path between the light deflecting unit and the light combining unit that allows only the transmission of the object light beam from the test object.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a schematic diagram of a wavefront measurement apparatus according to a first embodiment of the present invention;

FIG. 2 is a schematic diagram of a wavefront measurement apparatus according to a second embodiment of the present invention;

FIG. 3 is a drawing to explain parameters of light beams in the vicinity of a test object and an objective lens;

FIG. 4 is a graph that shows a transmittance of a light quantity adjusting filter; and

FIG. 5 is a schematic diagram of a conventional wavefront measurement apparatus.

DETAILED DESCRIPTION OF THE INVENTION

Exemplary embodiments of a wavefront measurement apparatus according to the present invention are explained in detail below with reference to accompanying drawings. The present invention is not limited to these embodiments.

First embodiment

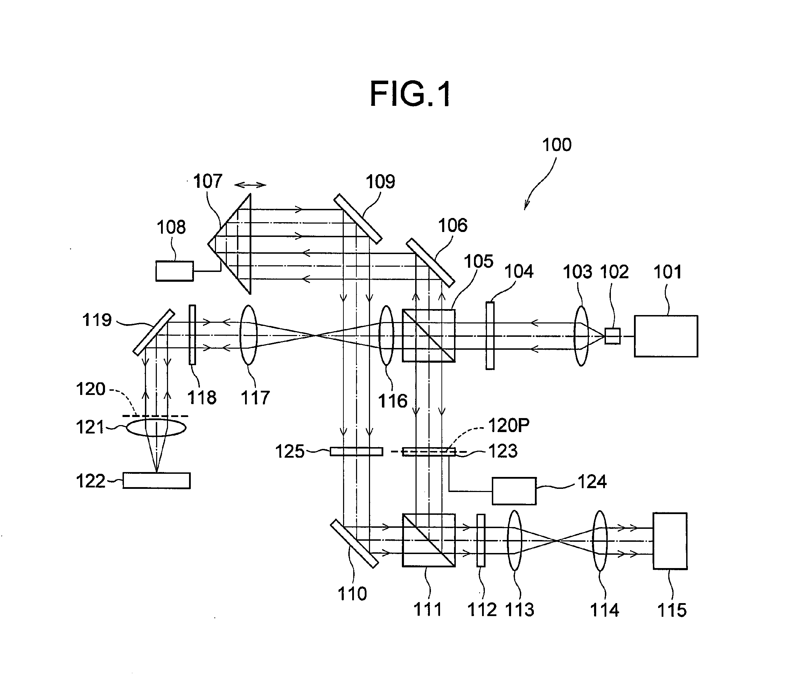

FIG. 1 is a schematic diagram of a wavefront measurement apparatus 100 according to a first embodiment. A light source 101 emits a laser light. The emitted laser light is converted into a parallel light beam by lenses 102 and 103. A linearly polarized light is rotated to an arbitrary state by passing the parallel light beam through a half wavelength plate 104. The rotation angle is adjusted according to an angle between an incident polarization and a delay phase width. The light beam that is output from the half wavelength plate 104 is split by a polarizing beam splitter 105. For example, an S-polarized light beam that is a reference light beam is reflected by a polarization plane of the polarizing beam splitter 105 and its optical path is bent by 90 degrees, and a P-polarized light beam that is an object light beam passes through the polarizing beam splitter 105.

In the present embodiment, the polarizing beam splitter 105 corresponds to a light splitting unit that splits a light beam from a light source into the object light beam and the reference light beam.

The reference light beam is explained first. The reference light beam whose optical path is bent by 90 degrees passes through a mirror 106, a corner cube prism 107, a mirror 109, a half wavelength plate 125, and a mirror 110, and becomes incident on a polarizing beam splitter 111.

The corner cube prism 107 is movable in the direction of the arrow shown in FIG. 1 by the action of to a driving unit 108. The driving unit 108 moves the corner cube prism 107 such that the center of a coherence gate coincides with the depth of a focal point according to a depth of a focal point position.

When the reference light beam passes through the half wavelength plate 125, it is converted into the P-polarized light beam. Consequently, the reference light beam passes through a polarization plane of the polarizing beam splitter 111.

The object light beam is explained below. The object light beam, after passing through the polarization plane of the polarizing beam splitter 105, passes through lenses 116 and 117 and becomes incident on a quarter wavelength plate 118. When the object light beam passes through the quarter wavelength plate 118, it is converted from the P-polarized light beam into a circularly-polarized light. The object light beam is then reflected by a mirror 119 and it is converged at a predetermined position of a test object 122 by an objective lens 121.

The test object 122 is a scattering body such as a biological body. The focal point position of the objective lens 121 is set such that it coincides with a predetermined depth from the surface of the test object 122. A light scattered in the test object 122 passes through a optical path that is the same as an advancing optical path, and reaches the polarizing beam splitter 105.

The object light beam passes through the quarter wavelength plate 118 twice, i.e., once in the advancing optical path and once in a returning optical path. Therefore, the polarization plane of the object light beam that is incident on the polarizing beam splitter 105 is rotated by 90 degrees and the object light beam becomes the S-polarized light beam. The S-polarized light beam is reflected by the polarization plane of the polarizing beam splitter 105.

In the present embodiment, the polarizing beam splitter 105 also functions as a light deflecting unit that guides the object light beam returning from the test object 122 towards the polarizing beam splitter 111 (light combining unit). The polarizing beam splitter 111 is described in detail later.

The object light beam that is reflected by the polarizing beam splitter 105 becomes incident on a light quantity adjusting filter 123. The lenses 116 and 117 also function as relay lenses. The lenses 116 and 117 relay an image of a pupil 120 of the objective lens 121. The light quantity adjusting filter 123 is arranged at a position of an intermediate image 120p of the pupil 120 that is relayed by the relay lenses.

In this manner, the light quantity adjusting filter 123 is arranged in a optical path, which allows only the transmission of the object light beam from the test object 122, between the polarizing beam splitter 105 (light deflecting unit) and the polarizing beam splitter 111 (light combining unit). The light quantity adjusting filter 123 can be created by depositing, for example, on a glass, a metallic film corresponding to a density distribution that is described later. The light quantity adjusting filter 123 also functions as an apodizing filter.

A plurality of light quantity adjusting filters should preferably be arranged for the light quantity adjusting filter 123 according to an observation depth of the test object 122 or a scattering absorption coefficient of the test object 122 or both. A light quantity adjusting filter switching unit 124 can selectively insert into or remove from the optical path any one light quantity adjusting filter from among the plurality of the light quantity adjusting filters. A selection and interchanging of the light quantity adjusting filter are explained later.

The object light beam, which passes through the light quantity adjusting filter 123, is reflected towards an imaging unit 115 by the polarization plane of the polarizing beam splitter 111. On the other hand, as described above, the reference light beam passes through the polarization plane of the polarizing beam splitter 111. The polarizing beam splitter 111 corresponds to the light combining unit that superimposes the object light beam returning from the test object 122 and the reference light beam.

The superimposed object light beam and the reference light beam pass through a polarizing plate 112 and lenses 113 and 114. An interference pattern is formed by combined wavefronts of the object light beam and the reference light beam after they pass through the polarizing plate 112. The imaging unit 115 captures an image of the interference pattern. Thus, information regarding the test object 122 can be obtained by analyzing the interference pattern image.

The light quantity adjusting filter 123 is explained below. As described in TISSUE OPTICS (ISBN 081943459-0), etc., an attenuation of an intensity of a light beam that passes through a scattering absorbing body can be determined by Beer-Lambert law expressed by Expression 1:

$$I(d) = I_0 \exp(-\mu_{total} d) \qquad (1)$$

where,

$I(d)$ is a thickness (observation depth),

$I_0$ is an intensity of the incident light, and

$\mu_{total}$ is a sum of a scattering coefficient $\mu s$ and an absorption coefficient $\mu a$ ($\mu_{total} = \mu_s + \mu_a$).

It is clear from Expression 1 that the brightness of the returning light from the scattering absorbing body is different in the central portion and in the peripheral portion. The reason is that, the distance for which the light passes through the scattering body is longer in the peripheral portion than in the central portion.

Therefore, by using the Beer-Lambert law and considering a transmittance in an effective diameter R of the light quantity adjusting filter 123 as 100%, the density distribution that will result in a constant intensity of the light beam within the effective diameter R of the light quantity adjusting filter 123 is calculated.

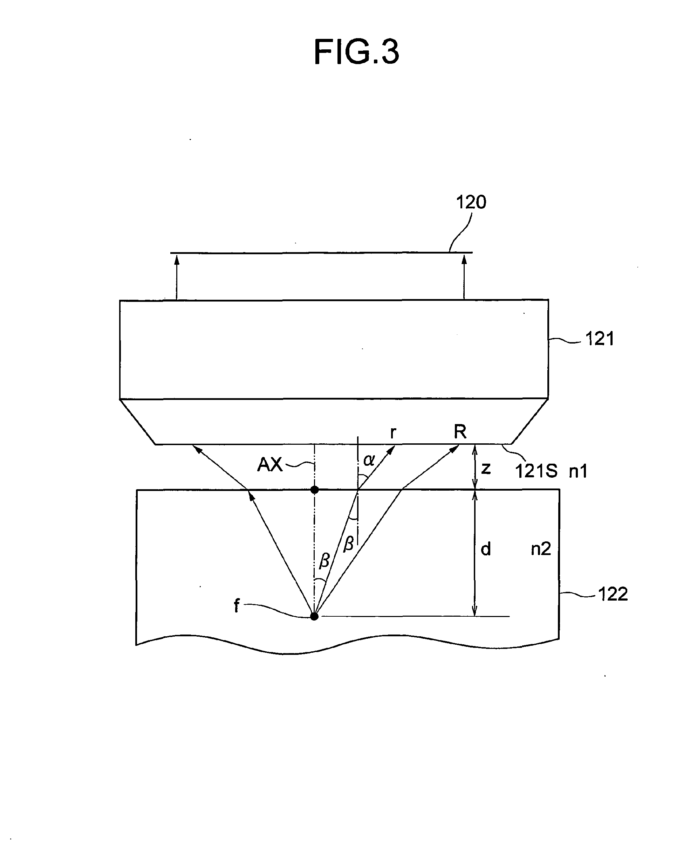

Reference symbols shown in FIG. 3 are defined below.

R: Effective diameter of light quantity adjusting filter 123,

r: Coordinate of light quantity adjusting filter 123 (radial direction $0 \leq r \leq R$),

d: Observation depth in scattering absorbing body 122,

$T(r, d, \mu_{all})$: Transmittance of light quantity adjusting filter 123 in r, d, $\mu_{total,}$

$\beta(r)$: Angle after refraction of incident light that corresponds to r,

$\beta(R)$: Angle after refraction of incident light that corresponds to R,

$L(r, d)$: Length of optical path passing through scattering absorbing body 122 in r and d,

$\alpha(r)$: Incident angle of incident light on scattering absorbing body 122 that corresponds to r,

$\alpha(R)$: Incident angle of incident light on scattering absorbing body 122 that corresponds to R,

Z: Distance from surface 121S of objective lens 121 to scattering absorbing body 122,

n1: Refraction index between surface 121S of objective lens 121 and scattering absorbing body 122, and

n2: Refractive index of scattering absorbing body 122.

Furthermore, $T(r, d, \mu_{all})$ is determined through steps (1), (2), and (3) given below.

(1) The angle after refraction of the incident light relative to r is calculated.

$\beta(R)$ is calculated from:

$R = z \times \tan\alpha(R) + \alpha \times \tan\beta(R)$

$n1 \times \sin\alpha = n2 \times \sin\beta$

(2) The angle after refraction of the incident light relative to R is calculated.
β (r) is calculated from:

r=z×tanα(r)+d×tanβ(r)
n1×sinα(r)=n2×sinβ(r)

(3) A transmittance T is calculated.

According to Beer-Lambert law,

$$T(r,d,\mu_{total})=$$

$$\exp[-2\times\mu_{total}\times d/\cos\beta(R)]/\exp[-2\times\mu_{total}\times d/\cos\beta(r)] \qquad (2)$$

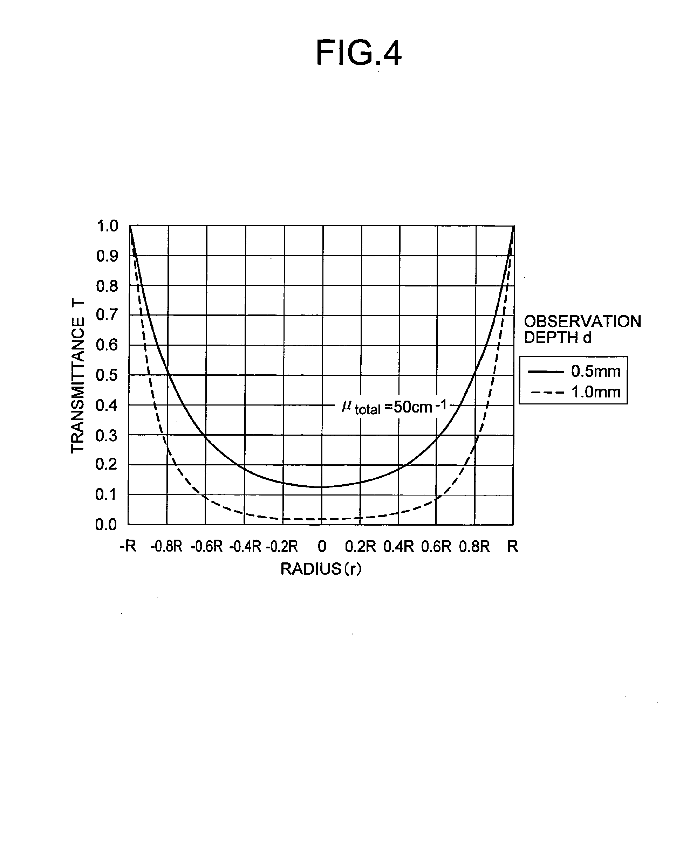

For example, the following two cases (a) and (b) are explained in FIG. 4 for the transmittance of the light quantity adjusting filter 123.
When (a) $\mu_{total}$=50 cm$^{-1}$, d=0.5 mm, and
(b) $\mu_{total}$=50 cm$^{-1}$, d=1 mm

According to the present embodiment, the difference in the light quantity distribution in the central portion and the peripheral portion that occurs when the light beam passes through the scattering absorbing body can be corrected by the light quantity adjusting filter 123 as expressed by the theoretical expression. In other words, if the light quantity adjusting filter 123 is inserted in the optical path that allows only the transmission of the object light beam, a quantity of returning light from the test object 122 remains the same in the central portion and the peripheral portion. Due to this, a contrast of the interference pattern also remains the same in the central portion and the peripheral portion. As a result, the interference pattern can be observed on an entire surface of a pupil and a precision of wavefront measurement can be improved.

Furthermore, as described above, an arrangement that allows interchanging of the light quantity adjusting filter 123 should preferably be made. According to the observation depth and the scattering absorption coefficient of the test object 122, a light quantity adjusting filter is interchanged with a light quantity adjusting filter that has a density distribution expressed by Expression 2.

The intensity of the returning light from the scattering absorbing body varies according to the observation depth and the scattering absorption coefficient. By interchanging the light quantity adjusting filter correctly, effects of the light quantity adjusting filter can be removed and a contrast difference in the central portion and the peripheral portion can be corrected as in the theoretical expression.

Furthermore, an element whose transmittance can be varied according to an electric voltage, such as a liquid crystal element, can be used as the light quantity adjusting filter 123. Thus, a transmittance distribution can be controlled to be optimum according to the observation depth. Consequently, an optimum density distribution can be created for every observation depth. As a result, easy observation is possible without need for interchanging the light quantity adjusting filter even if there is a variation in the observation depth.

Second embodiment

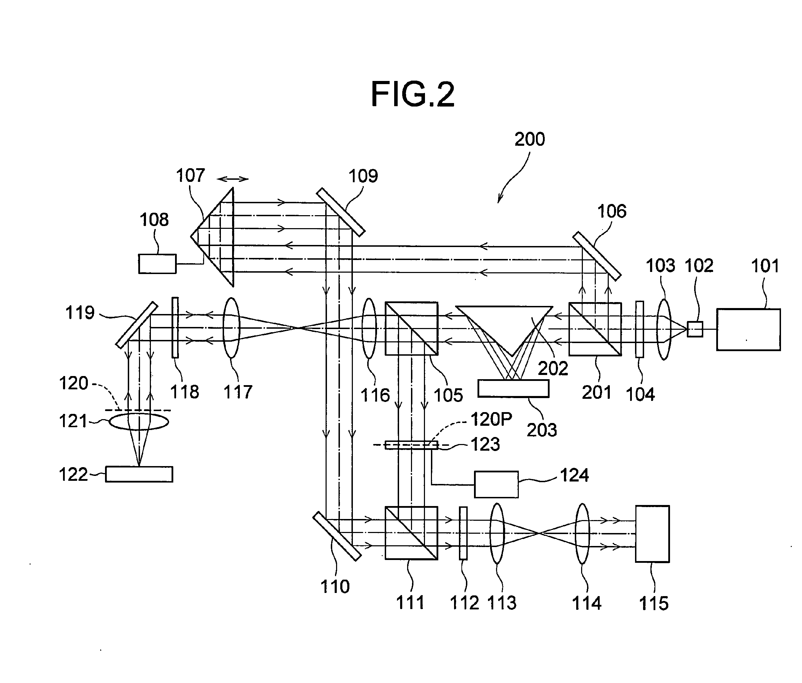

A wavefront measurement apparatus 200 according to a second embodiment of the present invention is explained below. FIG. 2 is a schematic diagram of the wavefront measurement apparatus 200 according to the second embodiment. The same reference numerals are assigned to the elements that are identical to that of the wavefront measurement apparatus 100 according to the first embodiment and redundant explanation is omitted.

A polarizing beam splitter 201 splits the parallel light beam from the light source 101 into the reference light beam and the object light beam. A wavefront correcting unit consisting of a prism 202 and a liquid crystal apparatus 203 is arranged in a optical path that allows only the transmission of the object light beam towards the test object 122. This optical path is located between the polarizing beam splitter 201 (light splitting unit) and the polarizing beam splitter 105 (light deflecting unit). The wavefront correcting unit changes a phase of a light beam that is incident on the test object 122 according to the measured wavefront. Thus, a light flux can be converged at single point even though there is a phase difference inside the test object 122.

In the present embodiment, a wavefront of a light beam that is incident on the test object 122 can be corrected without correcting the wavefront of the reference light beam or the object light beam returning from the test object 122. Furthermore, a quantity of the returning light from the test object 122 can be increased as a result of the wavefront correction. Due to this, a degree of visibility of the interference pattern increases and the precision of wavefront measurement can be improved.

Thus, the polarizing beam splitter 201 that splits the light beam into the light beam incident on the test object 122 and the reference light beam is arranged separately from the polarizing beam splitter 105 that splits the light beam into the light beam incident on the test object 122 and the object light beam (returning light) from the test object 122. Due to this, a optical path can be formed exclusively for the incident light and the incident light can be filtered and controlled separately, as described above.

Various modifications may be made without departing from the spirit or scope of the present invention.

As described earlier, the wavefront measurement apparatus according to the present invention is used for measuring the scattering absorbing bodies such as a biological body.

According to the present invention, a wavefront measurement apparatus is provided that can obtain an interference pattern having a good contrast and that can measure a wavefront with high precision.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A wavefront measurement apparatus comprising:

   a light source that emits a light beam;
   a light splitting unit that splits the light beam emitted from the light source into an object light beam and a reference light beam;
   an objective lens that converges the object light beam at a predetermined position of a test object;
   a light combining unit that superimposes the object light beam returning from the test object and the reference light beam;
   a light deflecting unit that guides the object light beam returning from the test object towards the light combining unit;
   an imaging unit that captures an image of an interference pattern formed by combined wavefronts; and
   a light quantity adjusting filter that adjusts a light quantity, and that is arranged in a optical path between the light deflecting unit and the light combining unit that allows only the transmission of the object light beam from the test object.

2. The wavefront measurement apparatus according to Claim 1, further comprising a relay lens to relay an image of a pupil of the objective lens,
   wherein the light quantity adjusting filter is arranged at a position of the pupil relayed by the relay lens.

3. The wavefront measurement apparatus according to Claim 1 or 2, wherein the light splitting unit functions as the light deflecting unit.

4. The wavefront measurement apparatus according to Claim 1 or 2, further comprising a wavefront correcting unit that adjusts a phase of a wavefront, and is arranged in a optical path between the light splitting unit and the light deflecting unit that allows only the transmission of an object light beam towards the test object.

5. The wavefront measurement apparatus according to any one of Claims 1 to 4, wherein the light quantity adjusting filter has a density distribution given by

$$\mathrm{T}(r,d,\mu_{total})=$$

$$\exp[-2\times\mu_{total}\times d/\cos\beta(R)]/\exp[-2\times\mu_{total}\times d/\cos\beta(r)],$$

where,
R is an effective diameter of the light quantity adjusting filter,
r is a coordinate of the light quantity filter (radial direction $O \leq r \leq R$),
d is an observation depth in the test body, $T(r,d,\mu_{all})$ is a transmittance of the light quantity adjusting filter in $r,d,\mu_{total}$,
$\beta(r)$ is an angle after refraction of an incident light that corresponds to r, and
$\beta(R)$ is an angle after refraction of an incident light that corresponds to R.

6. The wavefront measurement apparatus according to any one of Claims 1 to 5, further comprising a light quantity adjusting filter switching unit that selectively inserts into or removes from the optical path any one light quantity adjusting filter from among a plurality of the light quantity adjusting filters according to an observation depth of the test object or a scattering absorption coefficient of the test object or both.

# FIG.1

EP 2 479 532 A1

# FIG.2

EP 2 479 532 A1

# FIG.3

# FIG.4

# FIG.5

## EP 2 479 532 A1

Europäisches Patentamt
European Patent Office
Office européen des brevets

## EUROPEAN SEARCH REPORT

**Application Number**

EP 11 00 0436

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/033933 A1 (FEIERABEND MARCUS [DE] ET AL) 16 February 2006 (2006-02-16)<br>* paragraphs [0040] - [0046]; figures 1,3 *<br>* paragraphs [0058] - [0067] *<br>----- | 1-6 | INV.<br>G01B9/02<br>G01B9/04<br>G01J9/02 |
| Y | US 2004/075844 A1 (MARRON JOSEPH C [US] ET AL) 22 April 2004 (2004-04-22)<br>* paragraph [0065]; figure 2 *<br>----- | 1-6 | |
| X | LIN ZHOU ET AL: "Enhancement of depth resolution in optical coherence tomography by apodization",<br>PROGRESS IN BIOMEDICAL OPTICS AND IMAGING, SPIE - INTERNATIONAL SOCIETY FOR OPTICAL ENGINEERING, BELLINGHAM, WA, US,<br>vol. 5630, 1 January 2005 (2005-01-01), pages 874-881, XP040196412,<br>ISSN: 1605-7422, DOI: DOI:10.1117/12.580379 | 1 | |
| Y | * section 2, 2.1figures 1,,3 *<br>----- | 2-6 | TECHNICAL FIELDS SEARCHED (IPC) |
| Y | PIA MASSATSCH ET AL: "Time-domain optical coherence tomography with digital holographic microscopy",<br>APPLIED OPTICS,<br>vol. 44, no. 10,<br>1 January 2005 (2005-01-01), page 1806, XP55002649,<br>ISSN: 0003-6935, DOI: 10.1364/AO.44.001806<br>* section 3figure 1 *<br>----- | 1-6 | G01B<br>G01J |

The present search report has been drawn up for all claims

| Place of search | Date of completion of the search | Examiner |
|---|---|---|
| Munich | 12 July 2011 | Hambach, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

## ANNEX TO THE EUROPEAN SEARCH REPORT
## ON EUROPEAN PATENT APPLICATION NO.

EP 11 00 0436

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2011

| Patent document cited in search report | | Publication date | Patent family member(s) | | Publication date |
|---|---|---|---|---|---|
| US 2006033933 | A1 | 16-02-2006 | AT<br>EP | 449319 T<br>1626257 A1 | 15-12-2009<br>15-02-2006 |
| US 2004075844 | A1 | 22-04-2004 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060033933 A

**Non-patent literature cited in the description**

- *TISSUE OPTICS,* ISBN 081943459-0